# EUROPEAN PATENT APPLICATION

(11) **EP 2 827 220 A1**
(43) Date of publication of application: **21.01.2015**
(21) Application number: 14176154.4
(22) Date of filing: 08.07.2014
(51) Int. Cl.: G06F 1/16, G06F 3/02, H01H 13/06, H01H 13/12, H01H 13/70

(54) **Keyboard**

(30) Priority: 17.07.2013 JP 2013148862
(71) Applicant: Fujitsu Component Limited, Tokyo 141-8630 (JP)
(72) Inventor: Koike, Tamotsu, Shinagawa-ku, Tokyo 141-8630 (JP); Nakamura, Shuji, Shinagawa-ku, Tokyo 141-8630 (JP); Takemae, Akihiko, Shinagawa-ku, Tokyo 141-8630 (JP)
(74) Representative: Schultes, Stephan

(57) **Abstract**

A keyboard includes multiple key tops that are arranged adjacent to each other, a panel member including a crosspiece part formed between the multiple key-tops, and a cover part that covers a space between the plurality of key tops and the panel member.

## Description

### FIELD

The embodiments discussed herein are related to a keyboard for performing an input process for an electronic device or the like.

### BACKGROUND

An electronic device such as a notebook type computer is provided with a keyboard for performing an input process. The keyboard includes, for example, multiple key tops and a panel member including mounting holes on which the key tops are mounted.

One known panel member has crosspiece parts provided between adjacent key tops. Thereby, holes are formed in correspondence with the key tops. This type of keyboard is also referred to as an isolation type keyboard.
[Patent Document 1]: Japanese Laid-Open Utility Model Publication No. 07-036227
[Patent Document 2]: Japanese Laid-Open Patent Publication No. 09-259684
[Patent Document 3]: Japanese Laid-Open Patent Publication No. 09-022637
[Patent Document 4]: Japanese Laid-Open Patent Publication No. 2011-187298

In recent years, the demand for thinner notebook type personal computers has been growing. Further, the demand for thinner keyboards to be mounted on the personal computers is also strongly growing. However, the keys of the keyboards are to be raised or lowered. Further, a prescribed stroke space is to be provided in the keyboard. Therefore, in order to reduce the thickness of the keyboard, components of the keyboard including key tops also need to have their thickness reduced.

Thus, in a case of attempting to reduce the thickness of the keyboard, the height of the key top becomes less than the stroke amount of the key top. This causes a large space to be formed between the bottom of the key top and the crosspiece part.

In a case where the space is formed between the bottom of the key top and the crosspiece part, a fingernail of the operator may be inadvertently inserted into the space when the operator presses the key top. As a result, operability of the keyboard is degraded. Further, in a case where a keyboard includes a backlight provided on the rear surface of the key top, light of the backlight may escape from the space between the key top and the crosspiece part.

### SUMMARY

According to an aspect of the invention, there is provided a keyboard including multiple key tops that are arranged adjacent to each other, a panel member including a crosspiece part formed between the multiple key-tops, a cover part that covers a space between the multiple key tops and the panel member.

Other objects and further features of the present invention will be apparent from the following detailed description when read in conjunction with the accompanying drawings.

### BRIEF DESCRIPTION OF DRAWINGS

Fig. 1 is an enlarged perspective view of a keyboard according to an embodiment of the present invention;
Fig. 2 is a cross-sectional view illustrating a key-switch device of a keyboard according to an embodiment of the present invention;
Fig. 3 is an enlarged perspective of a panel member of the keyboard according to an embodiment of the present invention;
Fig. 4A is a side view of the keyboard according to the embodiment in a non-operated state;
Fig. 4B is a cross-sectional view of the keyboard according to the embodiment in a non-operated state;
Fig. 4C is a cross-sectional view of the keyboard according to the embodiment in an operated state;
Fig. 5 is a perspective view illustrating a personal computer applied with the keyboard;
Fig. 6A is a side view of a keyboard according to a modified example in a non-operated state;
Fig. 6B is a cross-sectional view of the keyboard according to the modified example in a non-operated state;
Fig. 6C is a cross-sectional view of the keyboard according to the modified example in an operated state;
Fig. 7 is an enlarged perspective view of a keyboard according to another embodiment of the present invention;
Fig. 8A is a side view of the keyboard of the another embodiment in a non-operated state;
Fig. 8B is a cross-sectional view of the keyboard of the another embodiment in a non-operated state;
Fig. 8C is a cross-sectional view of the keyboard of the another embodiment in an operated state;
Fig. 9A is a side view of a keyboard according to another modified example in a non-operated state;
Fig. 9B is a cross-sectional view of the keyboard of the another modified example in a non-operated state;
Fig. 9C is a cross-sectional view of the keyboard of the another modified example in an operated state;
Fig. 10A is a side view of a keyboard according to yet another embodiment in a non-operated state;
Fig. 10B is a cross-sectional view of the keyboard of the yet another embodiment in a non-operated state;
Fig. 10C is a cross-sectional view of the keyboard of the yet another embodiment in an operated state;
Fig. 11A is a side view of a keyboard according to the another modified example in a non-operated state;
Fig. 11B is a cross-sectional view of the keyboard of the another modified example in a non-operated state;
Fig. 11C is a cross-sectional view of the keyboard of the another modified example in an operated state;
Fig. 12A is a cross-sectional view of a key-switch device of a keyboard according to yet another embodiment of the present invention; and
Fig. 12B is a cross-sectional view of the key-switch device according to yet another embodiment of the present invention;

### DESCRIPTION OF EMBODIMENTS

In the following, embodiments of the present invention will be described with reference to the accompanying drawings.

Throughout the drawings, like components and parts are denoted with like reference numerals and redundant description may be omitted where appropriate. The drawings are not intended to illustrate the relative comparison between the below-described components and parts unless described as otherwise. Therefore, one of ordinary skill in the art may determine the actual dimensions of the components and parts described in the following embodiments.

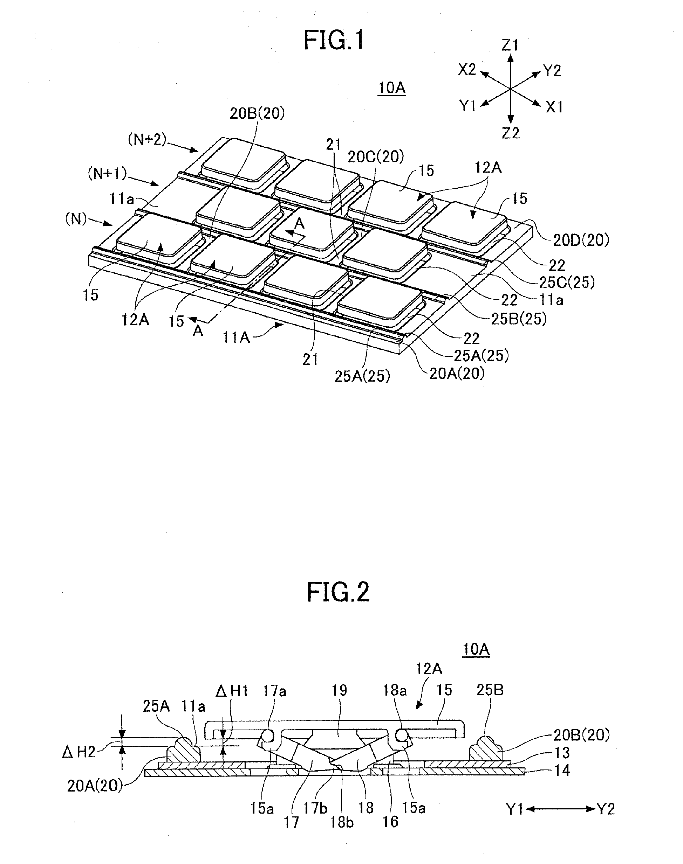

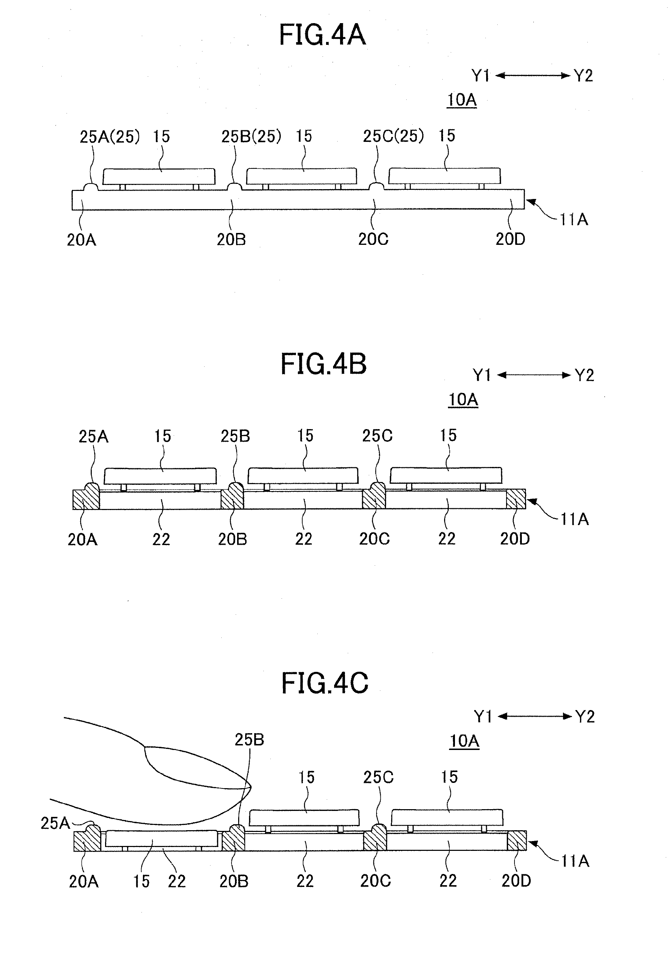

Figs. 1 to 4 are schematic diagrams describing a keyboard 10A according to an embodiment of the present invention. In Fig. 4, a part of key switch device 12A is omitted for the sake of convenience. The keyboard 10A may be applied to various electronic devices that are used to perform an input process.

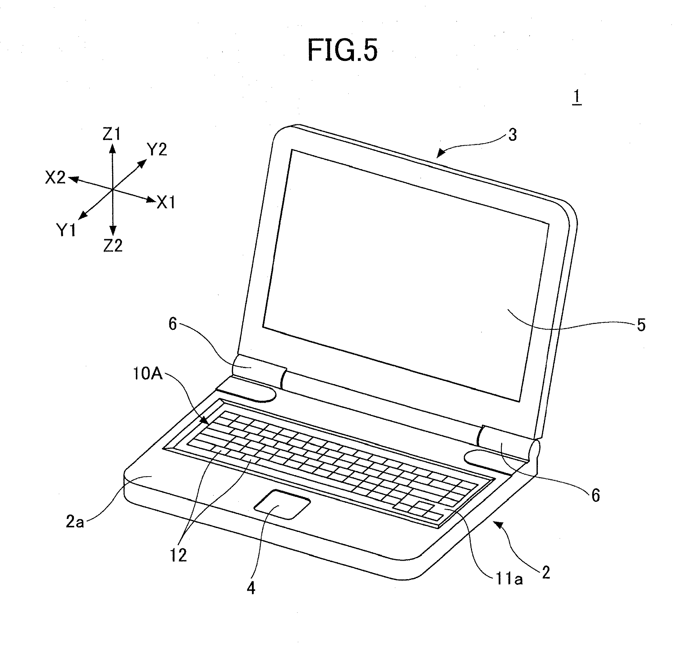

Fig. 5 illustrates an example where the keyboard 10A is applied to a notebook type personal computer 1. The personal computer 1 includes a housing 2 and a cover 3 that are joined by a hinge 6. The cover 3 is openable and closable relative to the housing 2.

The keyboard 10A is provided on an upper surface of the housing 2. Components other than the keyboard 10A such as a scroll pad 4 are also provided on the upper surface of the housing 2. Further, a liquid crystal display device 5, for example, is provided in the cover 3.

In the following description, a front side of the keyboard 10A mounted on the personal computer 1 (i.e. side of the operator of the keyboard 10A) corresponds to a "front direction". The front direction is indicated with an arrow Y1 in the drawings. A rear side of the keyboard 10A mounted on the personal computer 1 (i.e. side farther from the operator of the keyboard 10A) corresponds to a "rear direction". The rear direction is indicated with an arrow Y2 in the drawings. Further, a right side of the keyboard 10A mounted on the personal computer 1 from the viewpoint of the operator of the keyboard 10A corresponds to a "right direction". The right direction is indicated with an arrow X1 in the drawings. Further, a left side of the keyboard 10A mounted on the personal computer 1 from the viewpoint of the operator of the keyboard 10A corresponds to a "left direction". The left direction is indicated with an arrow X2 in the drawings. Further, an upper side from the viewpoint of the operator of the keyboard 10A corresponds to an "upper direction". The upper direction is indicated with an arrow Z1 in the drawings. Further, a lower side from the viewpoint of the operator of the keyboard 10A corresponds to a "lower direction". The lower direction is indicated with an arrow Z2 in the drawings.

As illustrated in Figs. 1 and 2, the keyboard 10A includes a panel member 11A and multiple of the key-switch devices 12A. Each key-switch device 12A includes a key top 15 that projects upward above an upper surface 11a of the panel member 11A. A signal can be input to the personal computer 1 via the keyboard 10A by the user pressing a given key top 15.

First, the key-switch device 12A is described by mainly referring to Fig. 2.

In this embodiment, the key-switch device 12A is a gear-link type key-switch device. However, the key-switch device 12A is not limited to the gear-link type key-switch device but may also be a key-switch device using another type of actuator (e.g., sliding type key-switch device).

The key-switch device 12A includes the key top 15, a frame member 16, and link members 17, 18.

The key top 15 has a surface on which letters and symbols (not illustrated) are indicated. Further, multiple engagement parts 15a are formed at a lower part of the key top 15 to engage the link members 17, 18.

The key top 15 may be formed of, for example, resin. In a case where the keyboard 10A is provided with a backlight-adaptable structure, a part of the key top 15 may be formed of a transparent resin for allowing light to be transmitted therethrough.

The frame member 16 and the link members 17, 18 are provided at a lower part of the key top 15.

The link members 17, 18 function as gear links that move the key top 15 upward and downward. A shaft part 17a and a shaft part 18a are provided at upper edge parts of the link members 17, 18, respectively. The shaft parts 17a, 18a are engaged with the engagement parts 15a formed in the key top 15.

Further, a gear link part 17b and a gear link part 18b are provided at lower edge parts of the link members 17, 18, respectively. The gear link parts 17b, 18b are configured as gears that mesh with each other. Accordingly, when the key top 15 is operated, each of the link members 17, 18 synchronously rotates, so that the key top 15 can be moved upward and downward while maintaining a level state.

The frame member 16 rotatably retains the link members 17, 18. The frame member 16 is fixed to a support plate 14. Accordingly, the link members 17, 18 are attached to the support plate 14 by way of the frame member 16.

A rubber actuator 19 is provided between the key top 15 and the frame member 16. The rubber actuator 19 has an elastic deformable structure.

Therefore, when the key top 15 is depressed, the rubber actuator 19 elastically deforms in correspondence with the depression of the key top 15. In a state where the rubber actuator 19 is deformed by the depression of the key top 15, the rubber actuator 19 generates an elastic recovering force that urges the rubber actuator 19 to return to its initial state. The elastic recovering force of the rubber actuator 19 works as a pressing force that causes the key top 15 to move upward.

Further, a membrane sheet 13 and the support plate 14 are provided on a lower side of the frame member 16.

The membrane sheet 13 is provided at a lower part of the rubber actuator 19. The membrane sheet 13 includes an electric contact that opens and closes in correspondence with the upward and downward movement of the key top 15. The membrane sheet 13 includes an upper sheet, a spacer sheet, and a lower sheet. Electrode patterns are formed on the upper and lower sheets of the membrane sheet 13. Each of the electrode patterns contact and separate in correspondence with the upward/downward movement of the key top 15. Thereby, the membrane sheet 13 functions as a membrane switch.

The support plate 14 is a plate member formed of, for example, a metal material. The support plate 14 is provided at a lower part of the membrane sheet 13. As described above, the link members 17, 18 are attached to the support plate 14 by way of the frame member 16. The support plate 14 functions as a reinforcement member of the keyboard 10A.

It is to be noted that a light guiding plate (not illustrated) may be provided below the key top 15 in addition to the membrane sheet 13 and the support plate 14. The light guiding plate may be used to illuminate a lower part of the key top 15 by radiating light from a light emitting diode or the like to the light guiding plate.

By providing the light guiding plate below the key top 15, the light guiding plate functions as a backlight. Accordingly, by forming the key top 15 with a material having a transparent property, the use of the keyboard 10A (personal computer 1) in a dark area can be facilitated.

Next, the panel member 11A is described by referring to Figs. 1 to 4C.

The panel member 11A is provided in the housing 2 of the personal computer 1. The panel member 11A may be integrally formed with an upper surface 2a of the housing 2. Alternatively, the panel member 11A and the housing 2 may be formed separately.

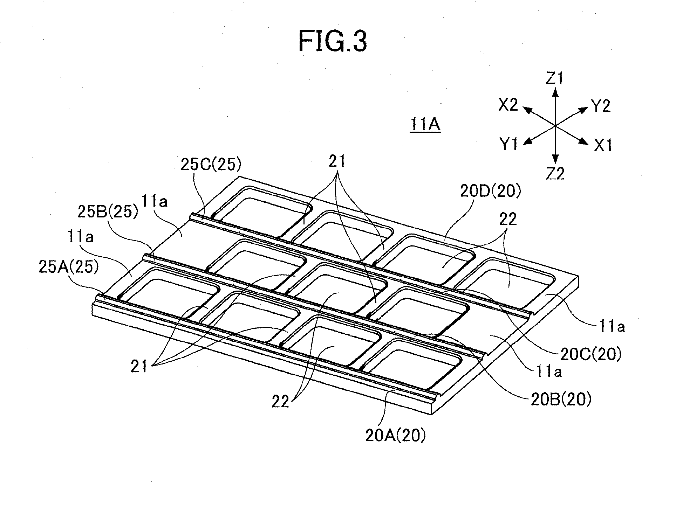

Fig. 3 illustrates the panel member 11A in a state having the key-switch devices 12A removed therefrom. The panel member 11A includes, for example, transverse crosspiece parts 20, longitudinal crosspiece parts 21, and a projecting cover parts 25.

Each transverse crosspiece part 20 is provided to extend in a transverse direction (X1-X2 direction) in the drawings. Each longitudinal crosspiece part 20 is provided to extend in a longitudinal direction (Y1-Y2 direction) in the drawings. The transverse crosspiece parts 20 and the longitudinal crosspiece parts 21 are arranged in a substantially lattice-like manner. Multiple holes 22 are formed between adjacent transverse cross piece parts 20 and longitudinal crosspiece parts 21. Each of the holes 22 has mounted therein a corresponding key top 15 of the key switch device 12A. In the following description, the hole 22 formed by the transverse and longitudinal crosspiece parts 20, 21 are also referred to as "mounting hole".

The mounting holes 22 are formed in correspondence with the positions of the multiple key-switch devices 12A arranged in the keyboard 10A. Accordingly, when the key-switch devices 12 are mounted on the panel member 11A, the transverse and longitudinal crosspiece parts 20, 21 are to be provided between adjacent key tops 15.

In the keyboard 10A of this embodiment, each of the key-switch devices 12A is separately provided in a corresponding mounting hole 22 encompassed by the transverse and longitudinal crosspiece parts 20, 21. This type of keyboard 10A may be referred to as an isolation keyboard, and the transverse and longitudinal crosspiece parts 20, 21 may be referred to bezels.

Incidentally, the personal computer 1 with the keyboard 10A mounted is desired to have its thickness reduced. There is also a growing desire to reduce the thickness of the keyboard 10A. In a case where the thickness of the key top 15 is reduced to fulfill these desires, a space may be formed between the panel member 11A (transverse crosspiece parts 20 and longitudinal crosspiece parts 21) and a bottom surface of the key top 15. As described above, the space between the panel member 11A and the key top 15 may degrade usability of the panel member 11A. This space is illustrated with arrows in Fig. 2 and is hereinafter referred to as "space ΔH1".

The projecting cover part 25 is a part of the panel member 11A that covers the space ΔH1. In this embodiment, the projecting cover part 25 is provided to project from the upper surface 11a of the panel member 11A. Further, the projecting cover part 25 is integrally formed with the panel member 11A.

The projecting cover part 25 may be provided in the transverse crosspiece part 20 positioned toward the front direction with respect to the key top 15 (i.e. direction nearer to the operator, Y1 direction). Alternatively, the projecting cover part 25 may be provided in the transverse crosspiece part 20 positioned toward the rear direction with respect to the key top 15 (i.e. direction farther from the operator, Y2 direction). Alternatively, the projecting cover part 25 may be provided in the transverse crosspiece parts 20 positioned toward both the front and rear directions with respect to the key top 15.

In other words, the projecting cover part 25 is formed in at least one of the transverse crosspiece parts 20 positioned toward the front and rear directions with respect to the key top 15, so that the projecting cover part 25 covers the space ΔH1 formed between the at least one of the transverse crosspiece parts 25 and the key top 15.

Figs. 1 to 4C illustrate an example in which the projecting cover part 25 according to an embodiment of the present invention is provided in the transverse crosspiece part 20 positioned toward the front direction with respect to the key top 15.

This example is described in detail with reference to Fig. 1. In Fig. 1, the key tops 15 arranged in the transverse direction at the foremost side (side toward the Y1 direction) row are assumed to be the key tops 15 of "row N", the key tops 15 arranged in the transverse direction that is one row farther (side toward the Y2 direction) from the row N are assumed to be the key tops 15 of "row N+1", and the key tops 15 arranged in the transverse direction that is two rows farther (side toward the Y2 direction) from the row N are assumed to be the key tops 15 of "row N+2".

Further, the transverse crosspiece part 20 positioned on the front side of the key tops 15 of the row N is assumed to be "transverse crosspiece part 20A", the transverse crosspiece part 20 positioned on the front side of the key tops 15 of the row N+1 is assumed to be "transverse crosspiece part 20B", and the transverse crosspiece part 20 positioned on the front side of the key tops 15 of the row N+2 is assumed to be "transverse crosspiece part 20C". Further, the transverse crosspiece part 20 positioned on the rear side of the key tops 15 of the row N+2 is assumed to be "transverse crosspiece part 20D".

In this embodiment, a projecting cover part 25A is provided on the transverse crosspiece part 20A, a projecting cover part 25B is provided on the transverse crosspiece part 20B, and a projecting cover part 25C is provided on the transverse crosspiece part 20C. It is to be noted that the projecting cover parts 25A-25C may be collectively referred to as the projecting cover part 25.

The projecting cover parts 25A-25C cover the space ΔH1 formed between the top of the transverse crosspiece parts 20A-20C and the bottom surface parts of the key tops 15.

It is to be noted that the phrase "cover the space ΔH1" not only refers to completely covering the space ΔH1 but also refers to covering the space ΔH1 to the extent that the operator's nail or the like is unable to enter the space ΔH1. In a case where a backlight is provided in the position of the key top 15 for radiating light of a light emitting diode by using the light guiding plate, the projecting cover parts 25A-25C cover the space ΔH1 to the extent that the light of the light guiding plate does not escape from the space ΔH1. The definition of the phrase "cover the space ΔH1" also applies to the description of the below-described embodiments and modified examples.

In the embodiment illustrated in Fig. 2, the amount in which the projecting cover part 25A projects from the upper surface 11a (upper surface of the transverse crosspiece part 20A) is indicated as "ΔH2". In this embodiment, the projection amount ΔH2 is set to be larger than the space ΔH1 (ΔH1 < ΔH2).

However, the amount ΔH2 in which the projecting cover part 25A projects from the upper surface 11a does not necessarily need to be set larger than the space ΔH1. As long as the projection amount ΔH2 can prevent the fingernails of the operation from entering or prevent the light of the backlight from escaping, the projection amount ΔH2 may be equal to or less than the space ΔH1.

Fig. 4C illustrates a state where the operator is operating the keyboard 10A according to the embodiment. In operating the keyboard 10A, the operator presses the key top 15. When the key top 15 of the keyboard 10A is pressed, the projecting cover part 25 (25A-25C) covers the space ΔH1 formed between the transverse crosspiece part 20 (20A-20D) and the key top 15. Therefore, even in a case where the thickness of the keyboard 10A is reduced, the fingernails of the operator can be prevented from entering the space ΔH1 during key operation. Thus, operability of the keyboard 10A can be improved.

The distance between the projecting cover part 25 on the rear side of the key top 15 (for example, the projecting cover part 25B) and a rear end of the key top 15 is greater than the distance between the projecting cover part 25 on the front side of the key top 15 (for example, the projecting cover part 25A) and a front end of the key top 15. The transverse crosspiece part 20D on the rear side of the key top 15 illustrated on the right end of Fig. 4C is formed without the projecting cover part. In the state of Fig. 4C, the upper surface of the key top 15 illustrated on the left end of Fig. 4C which is operated is substantially flush with the upper surface of the transverse crosspiece part 20B.

Further, in a case where a backlight is provided in the keyboard 10A, the projecting cover part 25 can reduce the amount of light escaping from the space ΔH1. Therefore, visibility is increased in a case where the keyboard 10A is used in a dark environment. Accordingly, operability of the keyboard 10A can be improved.

In this embodiment, the longitudinal crosspiece part 21 is formed without the projecting cover part 25. If both the transverse crosspiece part 20 and the longitudinal crosspiece part 21 are formed with the projecting cover part 25, the fingers of the operator would unintentionally contact the projecting cover part 25 formed on the longitudinal crosspiece part 21 when the operator operates the key tops 15. Thus, operability of the key tops 15 may be degraded.

Nevertheless, the projecting cover parts 25 may also be formed on the longitudinal crosspiece parts 21 to the extent that the projecting cover part 25 does not adversely affect operability of the key tops 15. In this case, light can be positively prevented from escaping from the space ΔH1 in a case where a backlight is provided in the keyboard 10A.

In this embodiment, each projecting cover part 25 (25A-25C) is integrally formed with the panel member 11A. However, the projecting cover part 25 and the panel member 11A may be formed as separate components.

In the case where the panel member 11A and the projecting cover part 25 are formed separately, the projecting cover part 25 may be formed of, for example, an elastic deforming material. In the case where the projecting cover part 25 is formed of the elastic deforming material, the projecting cover part 25 elastically deforms when the projecting cover part 25 is pressed by the fingers of the operator during operation of the key tops 15. Accordingly, the projecting cover part 25 would not impede operation of the key tops 15.

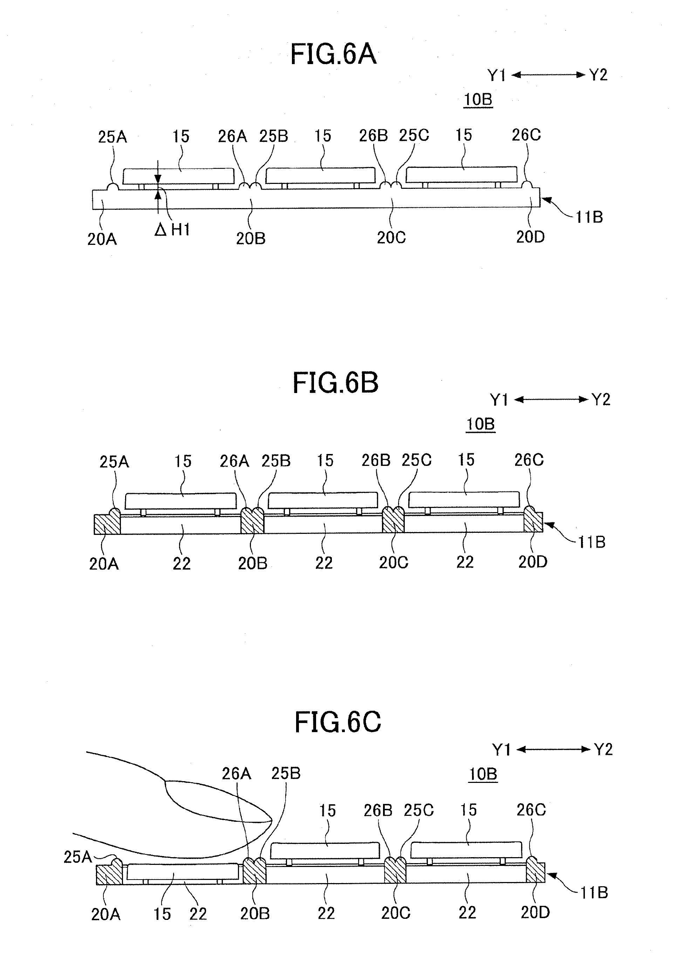

Next, a modified example and other embodiments of the keyboard 10A illustrated in Figs. 1-4C are described with reference to Figs. 6A-12B. In Figs. 6A-12B, like components/parts are denoted with like reference numerals as the reference numerals of the embodiments illustrated in Figs. 1-4 and are not further explained.

Figs. 6A-6C illustrate a keyboard 10B which is a modified example of the keyboard 10A illustrated in Figs. 1-4C.

A panel member 11B of the keyboard 10B has the projecting cover parts 25A-25C provided on the transverse crosspiece parts 20A-20C positioned at the front sides of the key tops 15. In addition, the panel member 11B has projecting cover parts 26A-26C provided on the transverse crosspiece parts 20B-20D positioned at the rear sides of the key tops 15. In the example illustrated in Figs. 6A-6C, two sets of projecting cover parts (one set indicated with reference numerals 26A, 25B, and the other set indicated with reference numerals 26B, 25C) are provided on corresponding transverse crosspiece parts 20B, 20C.

In this embodiment, the projecting cover parts 26A-26C have the same shape and size as the projecting cover parts 25A-25C and cover the space ΔH1.

In this embodiment, the projecting cover parts 26A-26C are integrally formed with the panel member 11C. However, the projecting cover parts 26A-26C and the panel member 11C may be formed as separate components. In a case where the panel member 11A and the projecting cover parts 26A-26C are formed separately, the projecting cover parts 26A-26C may be formed of a material that elastically deforms when the projecting cover parts 26A-26C are pressed by the fingers of the operator during operation of the key tops 15. The size and shape of the projecting cover parts 26A-26C do not necessarily need to be the same as the size and shape of the projecting cover parts 25A-25C.

Accordingly, by providing the projecting cover parts 25A-25C, 26A-26C on both the front and rear sides of each of the key tops 15, the fingernails of the operator can be prevented from entering the space ΔH1, and light of the backlight can be positively prevented from escaping from the space ΔH1. In the example of Fig. 6A, the space Δ H1 at the rear side of the key top 15 can be effectively covered by the projecting cover parts 26A-26C.

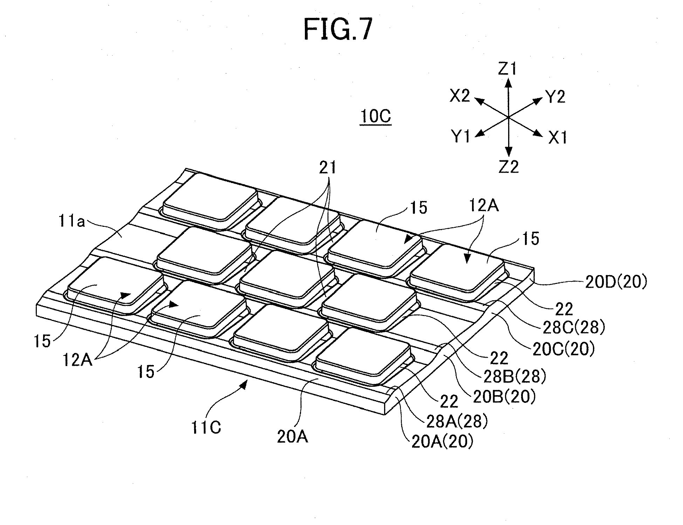

Figs. 7 to 8C illustrate a keyboard 10C according to another embodiment of the present invention.

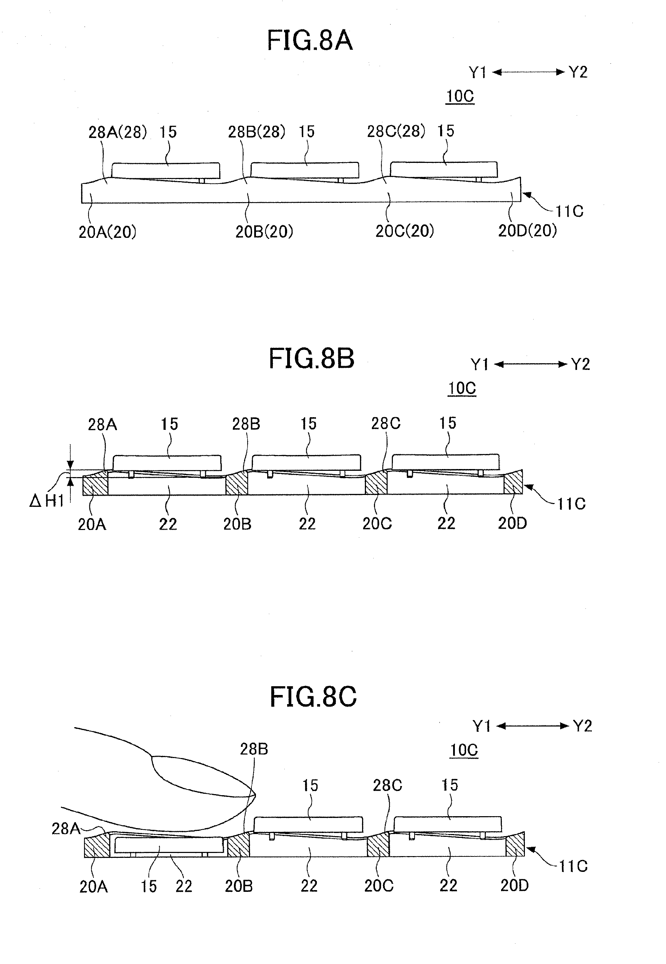

In this embodiment, the keyboard 10C includes projecting cover parts 28 provided on a panel member 11C. As illustrated in Fig. 8B, the projecting cover part 28 has a chevron shape from a cross-sectional view.

Similar to the projecting cover parts 25, the projecting cover parts 28 also function to cover the space ΔH1. In this embodiment, the projecting cover parts 28 are provided to project from the upper surface 11a of the panel member 11C. Further, the projecting cover parts 28 and the panel member 11C may be integrally formed or separately formed.

Further, the projecting cover parts 28 are provided in at least one of the transverse crosspiece parts 20 positioned toward the front and rear directions with respect to the key tops 15, so that the projecting cover part 28 covers the space ΔH1 formed between the at least one of the transverse crosspiece parts 20 and the key top 15.

In this embodiment, the projecting cover parts 28 are provided in the transverse crosspiece parts 20 positioned toward the front direction with respect to the key tops 15. That is, a projecting cover part 28A is provided on the transverse crosspiece part 20A, a projecting cover part 28B is provided on the transverse crosspiece part 20B, and a projecting cover part 28C is provided on the transverse crosspiece part 20C.

Fig. 8C illustrates a state where the operator is operating the keyboard 10C. Because the space ΔH1 is covered by the projecting cover parts 28, even in a case where the thickness of the keyboard 10C is reduced, the fingernails of the operator can be prevented from entering the space Δ H1 during key operation. Further, in a case where a backlight is provided in the keyboard 10C, the projecting cover part 28 can reduce the amount of light escaping from the space ΔH1. Therefore, visibility is increased in a case where the keyboard 10A is used in a dark environment. Accordingly, operability of the keyboard 10C can be improved.

Further, in the keyboard 10C of this embodiment, the projecting cover parts 28 having chevron-shaped cross sections are formed on the panel member 11C. Further, as illustrated in Fig. 8A, a part of the projecting cover part 28 corresponding to the front end of the key tops 15 is the highest part of the projecting cover parts 28. The projecting cover parts 28 are formed to gradually become lower toward the rear side of the key tops 15.

Because the projecting cover part 28 covers the space ΔH1 at the front end of the key top 15, the fingernails of the user can be prevented from entering the space ΔH1 and the light of the backlight can be prevented from escaping from the space ΔH1. Further, because the space H1 increases the more toward the rear side with respect to the position of the projecting cover parts 28, the fingers of the operator can be prevented from contacting the panel member 11C during operation of the key tops 15.

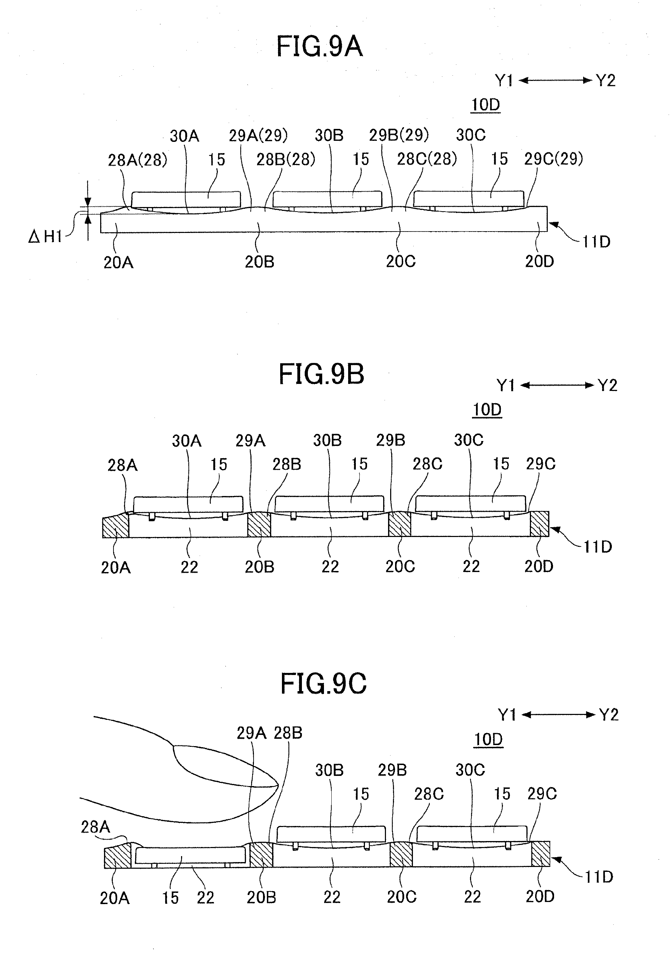

Fig. 9 illustrates a keyboard 10D which is a modified example of the keyboard 10C illustrated in Figs. 7-8C.

A panel member 11D of the keyboard 10D of Fig. 9 has the projecting cover parts 28A-28C provided on the transverse crosspiece parts 20A-20C positioned at the front sides of the key tops 15. In addition, the panel member 11D has projecting cover parts 29A-29C provided on the transverse crosspiece parts 20B-20D positioned at the rear sides of the key tops 15.

Further, curved recessed concave parts 30A-30C are formed between corresponding pairs of the projecting cover parts 28A-28C and the projecting cover parts 29A-29C. The shape (curvature) of each of the concave parts 30A-30C is set to correspond to the shape of the finger of the operator.

Accordingly, by providing the projecting cover parts 28A-28C, 29A-29C on both the front and rear sides of the key tops 15, the fingernails of the operator can be prevented from entering the space ΔH1, and light of the backlight can be positively prevented from escaping from the space Δ H1.

Further, the fingers of the operator can be fitted into the concave parts 30A-30C during operation of the key tops 15 because the concave parts 30A-30C provided between the corresponding pairs of the projecting cover parts 28A-28C and the projecting cover parts 29A-29C are formed with shapes corresponding to the shape of the finger of the operator. Accordingly, operability of the keyboard 10C can be improved.

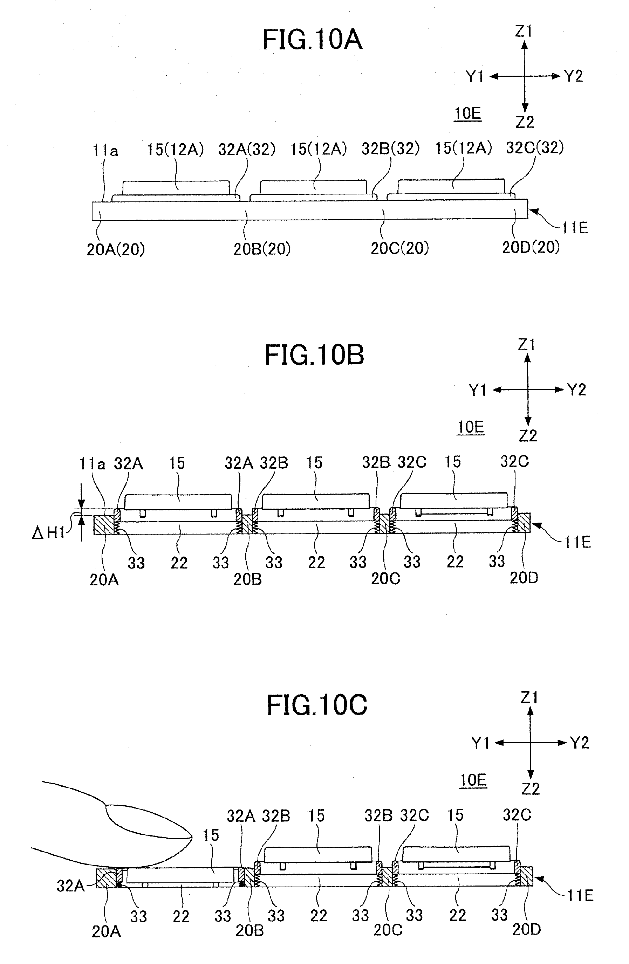

Figs. 10A-10C illustrate a keyboard 10E according to another embodiment of the present invention.

In this embodiment, frame covers 32 are provided as cover parts for covering the space ΔH1. The cover frames 32 are provided in the mounting holes 22 that are formed in the panel member 11E in correspondence with the positions of the key switch devices 12A. In Figs. 10A-10C, frame covers 32A-32C are provided in correspondence with three key switch devices 12A. The frame covers 32A-32C may also be collectively referred to as frame covers 32.

The key top 15, which is positioned within the frame cover 32, is mounted in a space surrounded by the frame cover 32 to move in the upward/downward directions. Further, the outer shape of the frame cover 32 is slightly smaller than the size of the mounting hole 22. The frame cover 32 is mounted in the mounting hole 22 to move in a vertical (upper/lower) direction. An elastic member 33 is provided on a lower side of each frame cover 32. The elastic member 33 exerts pressure on the frame cover 32 in the upper direction. The frame cover 32 is in a state moved in the upper direction when the key top 15 is not pressed by the operator.

In this embodiment, a coil spring may be used as the elastic member 33.

However, the elastic member 33 is not limited to a coil spring. As long as pressure can be exerted on the frame cover 32 in the upper direction, a material other than the coil spring (e.g., plate spring, rubber) may be used as the elastic member 33.

In a state where the frame cover 32 is moved upward by the elastic member 33, an upper part of the frame cover 32 projects from the upper surface 11a of the panel member 11E (transverse crosspiece part 20). Further, the amount by which the frame cover 32 projects from the upper surface 11a is equal to or greater than the space ΔH1 between the upper surface 11a and the bottom surface of the key top 15. Therefore, when the key top 15 is not pressed by the operator, the space ΔH1 formed between the panel member 11E and the key top 15 can be covered by the frame cover 32.

Fig. 10C illustrates a state where the operator is operating the keyboard 10E according to an embodiment of the present invention. Because the space ΔH1 is covered by the frame cover 32, the fingernails of the operator can be prevented from entering the space ΔH1 during key operation even if the thickness of the keyboard 10E (key top 15) is reduced. Further, in a case where a backlight is provided in the keyboard 10E, the frame cover 32 can reduce the amount of light escaping from the space ΔH1. Therefore, visibility is increased in a case where the keyboard 10E is used in a dark environment. Accordingly, operability of the keyboard 10E can be improved.

In the keyboard 10E of this embodiment, the frame cover 32 can move in the vertical direction with respect to the panel member 11E. In a case where the key top 15 is pressed by the operator, the frame cover 32 moves downward against the elastic force of the elastic member 33 as illustrated in Fig. 10C. The frame cover 32 can be prevented from obstructing the operation of the key top 15. Thus, operability of the keyboard 10E can be improved.

Owing to the elastic recovering force of the elastic member 33, the frame cover 32 that is moved in the lower direction by the pressing of the key top 15 can return to its initial position once the pressing of the key top 15 is released.

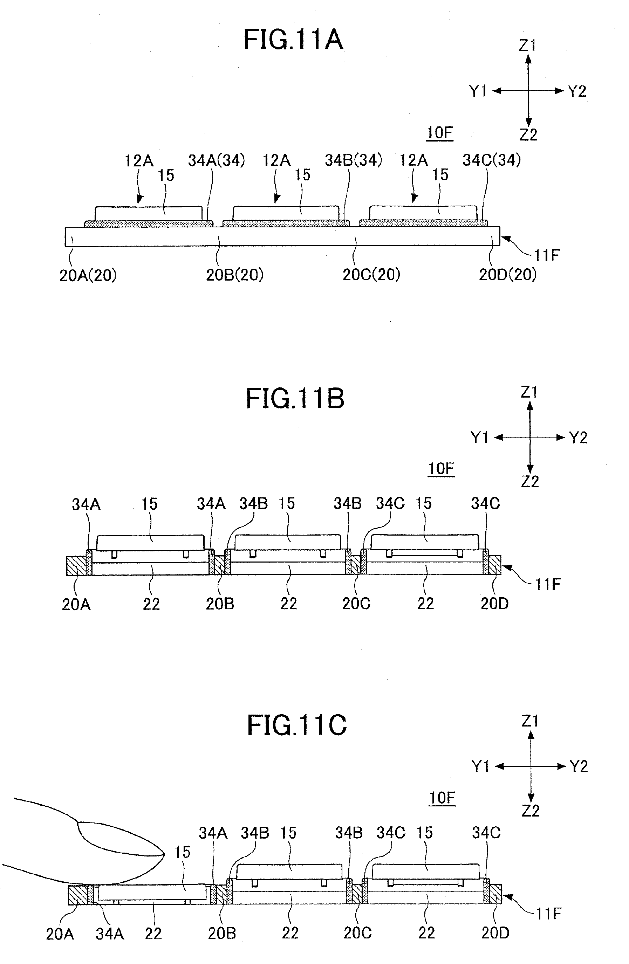

Figs. 11A-11C illustrate a keyboard 10F which is a modified example of the keyboard 10E illustrated in Figs. 10A-10C.

The keyboard 10E of Figs. 10A-10C has the frame cover 32 that moves in the upper direction by the elastic member 33. In the keyboard 10F of the modified example, a frame cover 34 is formed of a material that can elastically deform. For example, the frame cover 34 may be formed by using a rubber material or an elastic resin.

Thus, with the keyboard 10F according to this embodiment, the frame cover 34 is moved in the lower direction by elastic deformation when the key top 15 is pressed. Because the keyboard 10F does not require the elastic member 33, the number of components of the keyboard 10F can be reduced compared to the keyboard 10E.

Other than elastic deformation of the frame cover 34 itself, the frame cover 34 has the same shape and function as the frame cover 32 illustrated in Fig. 10. Therefore, further description of the shape and function of the frame cover 34 is omitted.

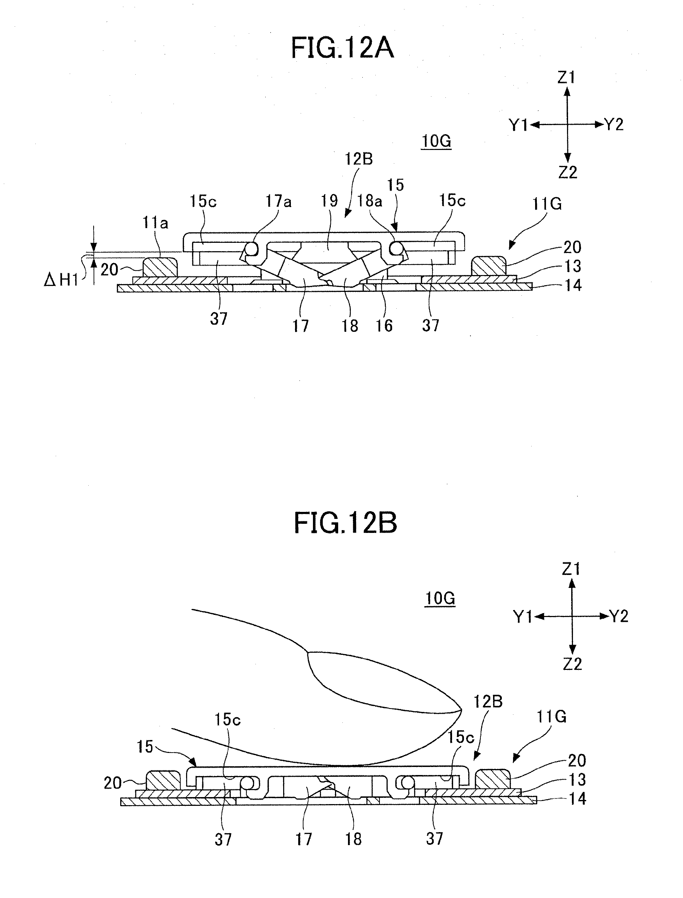

Figs. 12A-12B illustrate a keyboard 10G according to another embodiment of the present invention.

In this embodiment, a sliding cover member 37 to be used as the cover part for covering the space ΔH1 is provided in a key switch device 12B.

The sliding cover member 37 is a plate member provided on a bottom surface of the key top 15. The sliding cover member 37 can move in the vertical direction inside a sliding space 15c provided on the side of the bottom surface of the key top 15.

When the key top 15 is not pressed, the sliding cover member 37 slides in the lower direction by its own weight, so that the sliding cover member 37 projects from the bottom surface of the key top 15. In this state, the amount in which the sliding cover member 37 projects from the bottom surface of the key top 15 is greater than the space ΔH1 formed between the upper surface of the transverse crosspiece part 20 and the bottom surface of the key top 15.

An engagement mechanism (not illustrated) may be provided between the sliding cover member 37 and the sliding space 15c, in order to prevent the sliding cover member 37 from moving further below an area for covering the space ΔH1.

Fig. 12B illustrates a state where the key top 15 of the keyboard 10G is pressed by the operator. As the key top 15 is pressed and moved toward the lower direction, the sliding cover member 37 contacts the frame member 16 and relatively slides in the upper direction inside the sliding space 15c. Then, when the pressed key top 15 reaches a predetermined position, the sliding cover member 37 is accommodated inside the sliding space 15c.

In this accommodated state, the thickness of the key top 15 and the sliding cover part 37 becomes substantially equal to the thickness of the key top 15 (see Fig. 12B). Accordingly, even if the sliding cover part 37 is provided on the bottom surface of the key top 15, a sufficient stroke amount of the key top 15 is ensured during key operation. Further, the sliding cover part 37 provided on the bottom surface of the key top 15 does not obstruct the reduction of the thickness of the keyboard 10G.

With the keyboard 10G according to the above-described embodiment, because the space ΔH1 is covered by the sliding cover member 37, even if the thickness of the keyboard 10G is reduced, the fingernails of the operator can be prevented from entering the space ΔH1 during key operation. Further, in a case where a backlight is provided in the keyboard 10G, the sliding cover member 37 can reduce the amount of light escaping from the space ΔH1. Therefore, visibility is increased in a case where the keyboard 10G is used in a dark environment. Accordingly, operability of the keyboard 10E can be improved.

Further, with the keyboard 10G according to the above-described embodiment, the appearance of the keyboard 10G can be improved because the cover part for covering the space ΔH1 is not provided at the upper surface 11a of the panel member 11G. Further, the operating feel for the operator can be improved because no cover part is provided at the upper surface 11a of the panel member 11G.

With the above-described embodiment, thickness reduction and operability improvement of a keyboard can be achieved.

All examples and conditional language recited herein are intended for pedagogical purposes to aid the reader in understanding the invention and the concepts contributed by the inventor to furthering the art, and are to be construed as being without limitation to such specifically recited examples and conditions, nor does the organization of such examples in the specification relate to a showing of the superiority and inferiority of the invention. Although the embodiments of the present invention have been described in detail, it should be understood that the various changes, substitutions, and alterations could be made hereto without departing from the spirit and scope of the invention.

## Claims

1. A keyboard comprising:
key tops;
a panel onto which the key tops are arranged, and including a crosspiece formed between adjacent key-tops;
a cover that covers a space between the key tops and the panel.

2. The keyboard as claimed in claim 1,
wherein the cover includes a projection projecting from the crosspiece.

3. The keyboard as claimed in claim 1,
wherein the cover includes a first part provided at a first side of the key tops and a second part provided at a second side of the key tops opposite to the first side,
wherein the first part and the second part have shapes that are different from each other.

4. The keyboard as claimed in claim 2, wherein the projection has a chevron-shaped cross section.

5. The keyboard as claimed in claim 1,
wherein the cover is positioned within a space surrounded by the crosspiece part ,
wherein the cover is configured to move in a vertical direction with respect to the crosspiece part.

6. The keyboard as claimed in claim 5, further comprising:
an urging member that exerts pressure to the cover in an upper direction.

7. The keyboard as claimed in claim 1, wherein the cover is movably attached to the key top.

8. An electronic device comprising:
the keyboard of claim 1; and
a housing having the keyboard mounted thereon;
wherein the panel member and the housing are integrally formed.
